# EUROPEAN PATENT APPLICATION

(11) **EP 2 648 329 A1**
(43) Date of publication of application: **09.10.2013**
(21) Application number: 12163126.1
(22) Date of filing: 04.04.2012
(51) Int. Cl.: H02M 7/5387

(54) **Three-phase inverter for driving an electric motor having cascode power switches**

(71) Applicant: Volvo Car Corporation, 40 531 Göteborg (SE)
(72) Inventor: Magnusson, Anders, 42934 Kullavik (SE); Nilsson, Mats, 43441 Kungsbacka (SE)
(74) Representative: Widahl, Jenny Marie

(57) **Abstract**

A three-phase inverter (100) for driving a three-phase electric motor (101) comprises three half-bridges (111, 112, 113). Each half-bridge comprises a first transistor (121,122, 123), a second transistor (131, 132, 133), a third transistor (141, 142, 143) and a fourth transistor (151, 152, 153). The first transistor is serially connected to the third transistor and the second transistor is serially connected to the fourth transistor. Each pair of a first and third transistor or a pair of a second and fourth transistor, constitutes a cascode power switch. A first and a second control voltage (V1, V2, V3, V4, V5, V6), received by the third and fourth transistors respectively, is applicable for providing phases to the three-phase electric motor (101).

## Description

### TECHNICAL FIELD

Embodiments herein relate to a three-phase inverter for driving a three-phase electric motor. In particular, the three-phase inverter relates to driving of a three-phase electric motor of a vehicle.

### BACKGROUND

In modern society, environmental friendliness is becoming increasingly important for success in many different fields of technology. This is also the case within automotive industry. In order to meet this demand for environmental friendly products, hybrid and electric cars are developed.

A known hybrid car comprises a three-phase electric motor, a three-phase inverter and a battery. The three-phase inverter drives the electric motor by converting a direct current, taken from the battery, to an alternating current. Then, the three-phase inverter feeds the alternating current to the electric motor.

One exemplifying three-phase inverter comprises three half-bridges, where each half-bridge comprises a first and a second respective Insulated Gate Bipolar Transistor (IGBT transistor or IGBT-type transistor). Hence, the inverter comprises six IGBT-type transistors, i.e. two transistors in each half-bridge. Moreover, each half-bridge feeds a respective phase to the electric motor. In this manner, the electric motor receives three respective phases; one from each half-bridge. The phase in each half-bridge is generated by applying a first control voltage to the first respective transistor and a second control voltage to the second respective transistor.

Switching time refers to time from when a transistor is switched on until it actually conducts an electric current. The switching time also refers to time from when the transistor is switched off until it actually has stopped conducting an electric current. Somewhat simplified, shorter switching times imply higher power of the electric motor. Therefore, it is desired to reduce the switching time of the transistors. A reduced switching time implies that the inverter may be operated at a higher frequency.

IGBT-type transistors are normally operated at frequencies around 10 kHz or less as appropriate depending of the switching time of the IGBT-type transistors. At higher frequencies losses will increase and the transistor will eventually be overheated, which may result in failure of the transistor. Hence, a disadvantage with transistors of IGBT-type is that switching time is relatively long as compared to some other types of transistors, such as a Metal Oxide Semiconductor Field Effect Transistor (MOSFET). This leads to that switch losses, i.e. losses occurring in conjunction with switching of the transistor, are not negligible.

Another disadvantage with transistors of IGBT-type is that a voltage drop over IGBT-type transistors are in the range of 2.5 volt. This leads to considerable conductivity losses, i.e. losses when the transistor is switched on.

### SUMMARY

An object is to improve a three-phase inverter for driving a three-phase electric motor.

According to an aspect, the object is achieved by a three-phase inverter for driving a three-phase electric motor. The three-phase inverter comprises three half-bridges, wherein each half-bridge comprises a first and a second transistor. Each half-bridge is arranged to provide a phase to the three-phase electric motor by means of the first and second transistors. A first and a second control voltage are applicable for providing the phase to the three-phase electric motor. Moreover, the first and second transistors are configured to be normally-on. Said each half-bridge further comprises a third transistor configured to be normally-off. The third transistor is connected in series with the first transistor such that a drain of the third transistor is connected to a source of the first transistor. In addition, said each half-bridge further comprises a fourth transistor configured to be normally-off. The fourth transistor is connected in series with the second transistor such that a drain of the fourth transistor is connected to a source of the second transistor. The third and fourth transistors are arranged to operatively receive the first and second control voltages, respectively. In this manner, said each half-bridge is arranged to provide the phase to the three-phase electric motor.

As mentioned, the three-phase inverter comprises the third and fourth transistors connected in series with the first and second transistors, respectively. Thanks to the fact that the first and second control voltages are applicable to the third and fourth transistors, respectively, any current conducted through the first and second transistor, respectively, is prevented from passing from one half-bridge to another half-bridge in case the first and/or second control voltage is lost. Thus, the three-phase inverter is protected from short-circuiting. As a result, the three-phase inverter is improved. In particular, the three-phase inverter is improved in terms of safety in that the inverter is not damaged in case of lost control voltage.

The first transistor may be a first silicon carbide transistor and the second transistor may be a second silicon carbide transistor. Silicon carbide transistors are particularly advantageous due to their short switching times. A short switching time allows for operation at relatively high frequencies, e.g. above 10 kHz, while conductivity and switching losses are kept low.

The third transistor may be a first MOSFET transistor and the fourth transistor may be a second MOSFET transistor. Preferably, the first and second MOSFET transistors are configured to handle high currents at short switching times, while at the same time yield relatively low conductivity losses.

In some embodiments of the three-phase inverter, each half-bridge further comprises a first zenerdiode connected in parallel with the third transistor and a second zenerdiode connected in parallel with the fourth transistor. An anode of the first zenerdiode is connected to a source of the third transistor and a cathode of the first zenerdiode is connected to the drain of the third transistor. Hence, the first zenerdiode connected in parallel with the third transistor. An anode of the second zenerdiode is connected to a source of the fourth transistor and a cathode of the second zenerdiode is connected to the drain of the fourth transistor. Hence, a second zenerdiode connected in parallel with the fourth transistor.

Thanks to the first and second zenerdiodes, the third and fourth transistors are protected from overload due to leak voltage of the first and second transistor. This will be explained in more detail in the detailed description.

### BRIEF DESCRIPTION OF THE DRAWINGS

The various aspects of embodiments disclosed herein, including particular features and advantages thereof, will be readily understood from the following detailed description and the accompanying drawings, in which:
Figure 1 is a schematic block diagram illustrating an exemplifying three-phase inverter according to embodiments herein, and
Figure 2 is a schematic block diagram illustrating an exemplifying half-bridge of the three-phase inverter according to Figure 1.

### DETAILED DESCRIPTION

Throughout the following description similar reference numerals have been used to denote similar elements, parts, items or features, when applicable.

In order to improve a three-phase inverter for a three-phase electric motor, it has been realized that the IGBT-transistors of a known three-phase inverter, such as the one mentioned in the background section, needs to be replaced.

Hence, it is desired to use a transistor that has a short switching time and whose losses, such as switch losses and conductivity losses, are small.

A Silicon Carbide (SiC) transistor of normally-on type fulfils these requirements. The SiC transistor of normally-on type does also handle high voltages and currents at low losses, which often are required when driving for example a three-phase electric motor of a vehicle.

Normally-on type means that a negative potential at a gate of the transistor relatively a source of the transistor is required in order to allow the transistor to conduct a current from a drain of the transistor to the source. In this context, it shall also be mentioned that normally-off type means that a positive potential at a gate of the transistor relatively a source of the transistor is required in order to allow the transistor to conduct a current from a drain of the transistor to the source.

Consider a scenario, where the IGBT-transistors of the known three-phase inverter are replaced by SiC transistors of normally-on type.

In case of power failure, the first and second control voltages would become zero. This leads to that the SiC transistors are switched on. Thereby, the inverter, and also each half-bridge, would be short-circuited. Consequently, the invert would fail due to overheating caused by undesired currents.

Moreover, in the above mentioned scenario, special measures would need to be taken when the inverter is powered on. For example, some kind of sequential application of control voltages for generation of electric phases would be required in order to prevent damage of the inverter. Should the inverter be powered on without sequential application of the control voltages, the risk of short-circuit similarly to in case of power failure would be immediate.

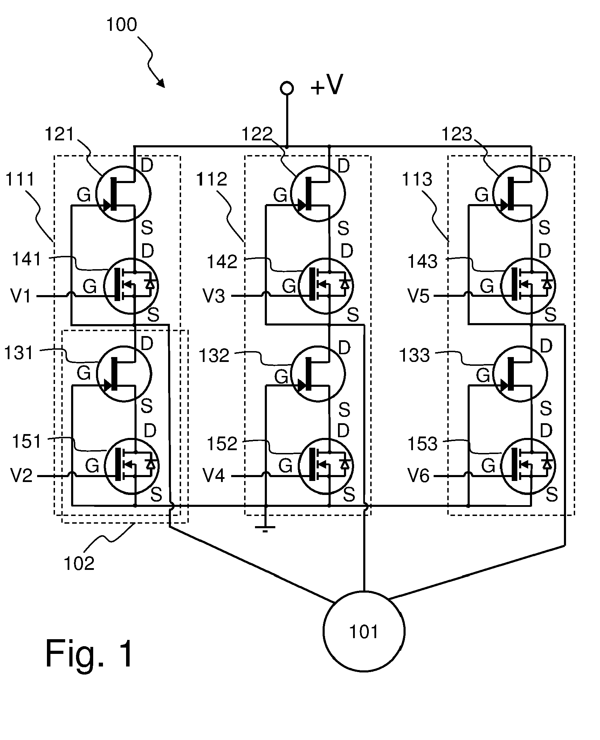

In Figure 1, an exemplifying three-phase inverter 100 for driving a three-phase electric motor 101 is shown. The three-phase inverter 100 overcomes problems related to short-circuiting mentioned above. The three-phase inverter 100 comprises three half-bridges 111, 112, 113. In connection with three-phase inverters, a half-bridge may also be referred to as a phase leg. The electric motor 101 may be a synchronous electric motor or an asynchronous electric motor. Three phases are generated by the inverter 100 by converting direct current from a battery +V.

Each half-bridge 111, 112, 113 comprises a first, a second, a third and a fourth transistor 121, 122, 123, 131, 132, 133, 141, 142, 143, 151, 152, 153.

In this example, the first transistor 121, 122, 123 is a first SiC transistor, such as a first SiC Junction Field Effect Transistor (J-FET) transistor. Furthermore, the second transistor 131, 132, 133 is a second SiC transistor, such as a second SiC J-FET transistor. In total six SiC transistors are shown, since there is a first and a second respective transistor 121,122, 123, 131, 132, 133 in each half-bridge. Other types of SiC transistors that may be used are bipolar and MOSFET SiC transistors. It may be preferred to use SiC J-FET transistors, since these have the most attractive properties in terms of conductivity losses, switching losses and operating frequency.

Moreover, in this example, the third transistor 141, 142, 143 is a first MOSFET transistor and the fourth transistor 151, 152, 153 is a second MOSFET transistor. In total six MOSFET transistors are shown, since there is a third and a fourth respective transistor 141, 142, 143, 151, 152, 153 in each half-bridge. It shall here be noted that the MOSFET transistors are only required to handle a voltage which is required for the SiC transistors to switch off. Therefore, it is preferred that the MOSFET is a low volt and low drain-source resistance (RDS) transistor. RDS relates to resistance when the transistor is conducting, which in turn implies a certain conductivity loss. Furthermore, it may be preferred that the MOSFETs have relatively short switching times, which allows the inverter to be operated at frequencies above 10 kHz.

The first and second transistors 121,122, 123, 131, 132, 133 are configured to be normally-on and the third and fourth transistors 141, 142, 143, 151, 152, 153 are configured to be normally-off. That is to say, the first and second transistors 121,122, 123, 131, 132, 133 are of normally-on type and the third and fourth transistors 141, 142, 143, 151, 152, 153 are of normally-off type.

The third transistor 141, 142, 143 is connected in series with the first transistor 121, 122, 123 such that a drain D of the third transistor 141, 142, 143 is connected to a source S of the first transistor 121,122, 123.

The fourth transistor 151, 152, 153 is connected in series with the second transistor 131, 132, 133 such that a drain D of the fourth transistor 151, 152, 153 is connected to a source S of the second transistor 131, 132, 133.

Each half-bridge 111, 112, 113 is arranged to provide a phase, i.e. an electric phase, to the three-phase electric motor 101 by means of the first and second transistors 121, 122, 123, 131, 132, 133. In order to provide the phase to the three-phase electric motor 101 a first and a second control voltage V1, V2, V3, V4, V5, V6 are applicable to the third and fourth transistors 141, 142, 143, 151, 152, 153. In total six control voltages are applicable, since there is a first and a second respective control voltage is applicable in each half-bridge. Hence, the third and fourth transistors 141, 142, 143, 151, 152, 153 are arranged to operatively receive the first and second control voltages V1, V2, V3, V4, V5, V6, respectively. The first and second control voltages V1, V2, V3, V4, V5, V6 are received via a gate G of the third and fourth transistors 141, 142, 143, 151, 152, 153, respectively. In this manner, said each half-bridge 111, 112, 113 is arranged to provide the phase to the three-phase electric motor 101.

For completeness, a gate G and a drain D of the first transistor 121,122, 123, a gate G and a drain D of the second transistor 131, 132, 133, a source S of the third transistor 141, 142, 143 and a source S of the fourth transistor 151, 152, 153 are also shown in Figure 1.

The gate G of the first transistor 121, 122, 123 is connected to the source S of the third transistor 141, 142, 143 and to the three-phase electric motor 101. The drain D of the first transistor 121, 122, 123 is connected to the battery +V.

The source S of the third transistor 141, 142, 143 is connected to the drain D of the second transistor 131, 132, 133 and to the three-phase electric motor 101.

The gate G of the second transistor 131, 132, 133 is connected to the source S of the fourth transistor 151, 152, 153 and to ground.

Now consider again the case of power failure mentioned above and for example a lower portion 102 of the left most half-bridge 111 of Figure 1. In Figure 1, it can be seen that if the second control voltage V2 is lost, the fourth transistor 151 is switched off since this transistor is of normally-off type. Notably, potential at the gate G of the second transistor 131 is equal to ground, such as 0 volt. However, the second transistor 131 is switched on since this transistor is of normally-on type. Then, current will then be conducted through the second transistor 131 until potential at the source S of the second transistor 131 will become equal to a switch off voltage of the second transistor 131. At the switch off voltage of the second transistor 131, the potential at the gate relatively the source of the second transistor 131 is the negative value of the switch off voltage. Thus, the second transistor 131 is switched off. Similar reasoning applies for the remainder of the inverter 100. Therefore, an advantage with the three-phase inverter 100 is that the first and second transistors 121, 122, 123, 131, 132, 133 will switch off when the first and second control voltages V1, V2, V3, V4, V5, V6 are lost. Hence, the three-phase inverter 100 will not be short-circuited.

A further advantage is that sequential application of the control voltages is not required. Thus, a number of electric components of the three-phase inverter 100 may be kept low. As a result, the cost of the three-phase inverter 100 is also kept low.

Moreover, the three-phase inverter 100 of Figure 1 may be operated at switching frequencies above 10 kHz. The switching of the inverter 100 generates a sound, which in cases where the switching frequency is above 10 kHz may be difficult to perceive for a human being. This is advantageous.

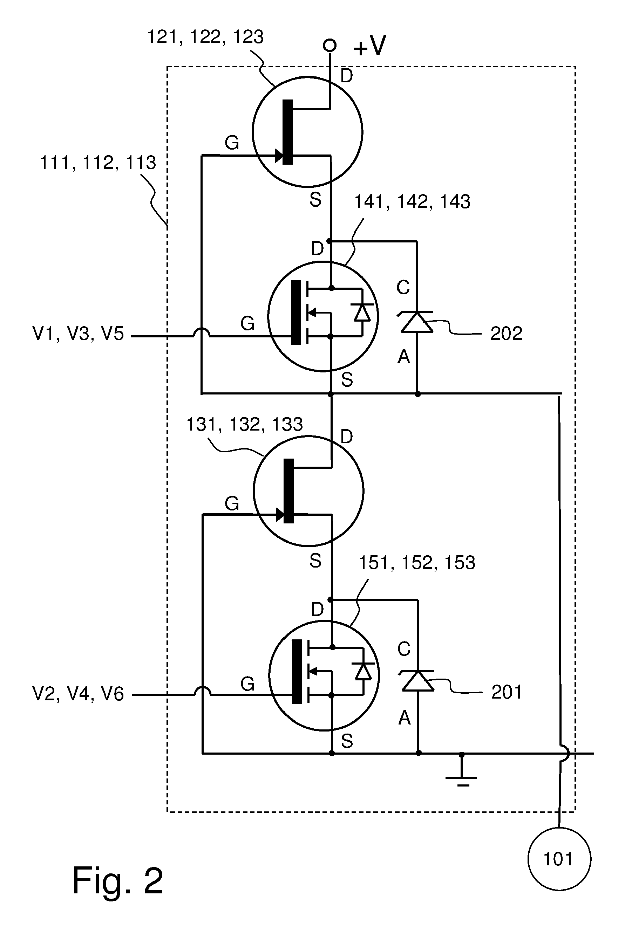

In Figure 2, an exemplifying half-bridge 111, 112, 113 of the three-phase inverter 100 according to Figure 1 is shown.

In addition to what is already mentioned in conjunction with Figure 1, each half-bridge 111, 112, 113 further comprises a first zenerdiode 201 and a second zenerdiode 202. In total, there are six zenerdiodes (only two are shown in the Figure), since there is a first and a second respective zenerdiode 201, 202 in each half-bridge.

The first zenerdiode 201 is connected in parallel with the third transistor 141, 142, 143, while being arranged such that an anode A of the first zenerdiode 201 is connected to a source S of the third transistor 141, 142, 143 and a cathode C of the first zenerdiode 201 is connected to the drain D of the third transistor 141, 142, 143.

The second zenerdiode 202 is connected in parallel with the fourth transistor 151, 152, 153, while being arranged such that an anode A of the second zenerdiode 202 is connected to a source S of the fourth transistor 151, 152, 153 and a cathode C of the second zenerdiode 202 is connected to the drain D of the fourth transistor 151, 152, 153.

The first and second zenerdiodes 201, 202 are matched to a leak voltage of the first and second transistors 121, 122, 123, 131, 132, 133 such as to protect the third and fourth transistors, i.e. the MOSFETs, from being overloaded. When the third and fourth transistors are overloaded, they may be damaged and thus unable to operate as required.

The leak voltage occurs due to that the first and second transistors 121, 122, 123, 131, 132, 133 are not behaving as ideal switches, i.e. also when these transistors are switched on a small voltage drop over the transistors is present. Hence, when the transistors are switched on a small voltage, i.e. the leak voltage, is leaked over to the source.

Even though embodiments of the various aspects have been described, many different alterations, modifications and the like thereof will become apparent for those skilled in the art. The described embodiments are therefore not intended to limit the scope of the present disclosure.

## Claims

1. A three-phase inverter (100) for driving a three-phase electric motor (101),
wherein the three-phase inverter (100) comprises three half-bridges (111, 112, 113), wherein each half-bridge (111, 112, 113) comprises a first and a second transistor (121,122, 123, 131, 132, 133), wherein each half-bridge (111, 112, 113) is arranged to provide a phase to the three-phase electric motor (101) by means of the first and second transistors (121,122, 123, 131, 132, 133), wherein a first and a second control voltage (V1, V2, V3, V4, V5, V6) are applicable for providing the phase to the three-phase electric motor (101), the three-phase inverter being **characterized in that**
the first and second transistors (121,122, 123, 131, 132, 133) are configured to be normally-on, and each half-bridge (111, 112, 113) further comprises:
a third transistor (141, 142, 143) configured to be normally-off, wherein the third transistor (141, 142, 143) is connected in series with the first transistor (121, 122, 123) such that a drain (D) of the third transistor (141, 142, 143) is connected to a source (S) of the first transistor (121,122, 123); and
a fourth transistor (151, 152, 153) configured to be normally-off, wherein the fourth transistor (151, 152, 153) is connected in series with the second transistor (131, 132, 133) such that a drain (D) of the fourth transistor (151, 152, 153) is connected to a source (S) of the second transistor (131, 132, 133), wherein
the third and fourth transistors (141, 142, 143, 151, 152, 153) are arranged to operatively receive the first and second control voltages (V1, V2, V3, V4, V5, V6), respectively, thereby said each half-bridge (111, 112, 113) is arranged to provide the phase to the three-phase electric motor (101).

2. The three-phase inverter (100) according to claim 1, wherein the first transistor (121, 122, 123) is a first silicon carbide transistor and the second transistor (131, 132, 133) is a second silicon carbide transistor.

3. The three-phase inverter (100) according to claim 1 or 2, wherein the third transistor (141, 142, 143) is a first MOSFET transistor and the fourth transistor (151, 152, 153) is a second MOSFET transistor.

4. The three-phase inverter (100) according to any one of claims 1-3, wherein each half-bridge (111, 112, 113) further comprises:
a first zenerdiode (201) connected in parallel with the third transistor (141, 142, 143), wherein an anode (A) of the first zenerdiode (201) is connected to a source (S) of the third transistor (141, 142, 143) and a cathode (C) of the first zenerdiode (201) is connected to the drain (D) of the third transistor (141, 142, 143), and
a second zenerdiode (202) connected in parallel with the fourth transistor (151, 152, 153), wherein an anode (A) of the second zenerdiode (202) is connected to a source (S) of the fourth transistor (151, 152, 153) and a cathode (C) of the second zenerdiode (202) is connected to the drain (D) of the fourth transistor (151, 152, 153).
